# FASCICULE DE BREVET EUROPEEN

(11) **EP 3 248 177 B1**
(45) Date de publication et mention de la délivrance du brevet: **21.07.2021**
(21) Numéro de dépôt: 16703588.0
(22) Date de dépôt: 20.01.2016
(51) Int. Cl.: G07C 9/00

(54) **CONTRÔLE D'ACCÈS AUX ÉQUIPEMENTS D'UN SITE SÉCURISE PAR AUTHENTIFICATION BIOMÉTRIQUE**
STEUERUNG DES ZUGRIFFS AUF DIE AUSRÜSTUNG EINER STELLE, DIE DURCH BIOMETRISCHE AUTHENTIFIZIERUNG GESICHERT IST
ACCESS CONTROL TO EQUIPMENTS ON A SITE SECURED BY BIOMETRIC AUTHENTICATION

(30) Priorité: 22.01.2015 FR 1550503
(43) Date de publication de la demande: 29.11.2017
(73) Titulaire: Atos SE, 95870 Bezons (FR); Degrémont, 92040 Paris La Défense (FR)
(72) Inventeur: FIEVEZ, Eric, 92150 Suresnes (FR); PEGUET, Steve, 94600 Choisy-Le-roi (FR); MORET, Bruno, 92000 Nanterre (FR)
(74) Mandataire: Novagraaf Technologies
(86) Numéro de dépôt international: PCT/FR2016/050109
(87) Numéro de publication internationale: WO 2016/116702

(56) Documents cités:
- DE-A1-102010 031 932
- US-A1- 2003 001 722
- US-A1- 2005 146 417
- US-A1- 2006 090 079
- US-B1- 6 624 739

## Description

### DOMAINE DE L'INVENTION

L'invention concerne le contrôle d'accès aux équipements d'un site sécurisé tel une usine, un laboratoire ou tout autre lieu où le besoin existe de contrôler l'accès physique ou logique du personnel présent aux différents équipements. Elle s'applique notamment au contrôle d'accès d'équipements connectés à un réseau de communication associé au site sécurisé.

### CONTEXTE DE L'INVENTION

Certains sites nécessitent de mettre en place des accès sécurisés aux différents équipements qui y sont présents. Il s'agit notamment des sites industriels dans lesquels des équipements comme des machines, des valves, des panneaux de contrôle électrique, des terminaux informatiques, etc. ne doivent être manipulés que par un personnel autorisé. Il peut en être de même de portes permettant d'autoriser ou non l'accès à certaines zones du site sécurisé. Le site sécurisé peut être également de nature non-industrielle : il peut s'agir d'un site administratif, d'un hôpital, etc.

Il est habituel de fournir au personnel des dispositifs portables communicants de type badge qui, par communication avec l'équipement, donnent accès ou non au porteur de badge à cet équipement. La communication peut se faire par des technologies comme RFID (pour *« Radio Frequency Identification* ») ou NFC (pour « *Near Field Communication »*)*.*

Toutefois une telle solution est insuffisante dès lors qu'un niveau élevé de sécurisation est souhaité. En effet, de tels dispositifs portables peuvent se prêter entre membres du personnel, se perdre, se voler... de sorte qu'il n'y a aucune garantie que le porteur d'un tel dispositif soit effectivement un membre autorisé du personnel.

Une solution alternative consiste à utiliser des moyens d'authentification biométrique. Ceux-ci permettent d'assurer que l'utilisateur d'un équipement associé à ces moyens est effectivement un membre autorisé du personnel. Toutefois une telle solution oblige à déployer ces moyens d'authentification biométrique sur l'ensemble des équipements soumis à autorisation. Ces moyens sont coûteux et un tel déploiement engendre un coût prohibitif dès lors que le site comporte un nombre important d'équipements à sécuriser.

Par ailleurs, des solutions basées sur une interaction, notamment par un clavier, ont été proposées. Elles peuvent consister en la saisie d'un identifiant et d'un mot de passe, par exemple. Ces solutions souffrent du fait qu'elles nécessitent une interaction humaine qui peut s'avérer trop lente ou trop dépendante d'un accès réseau. Les interactions complexes sont préjudiciables à l'efficacité du personnel du site, mais aussi très pénalisante voire rédhibitoire en cas d'urgence. En outre, si une situation nécessite une intervention d'urgence, le personnel risque d'être dans une situation de stress telle qu'il ne sera pas forcément à même d'exécuter ces interactions d'authentification de façon correcte.

De plus, dans le cadre d'un site industriel, le personnel peut être amené à porter des gants, des lunettes spéciales, etc. de sorte qu'il ne lui soit pas facile, voire impossible de manipuler un clavier ou d'autres dispositifs d'interaction pour son authentification.

Le port de gants ou de masque peut en outre empêcher la mise en place des solutions basées sur l'authentification biométrique.

Le document DE 10 2010 031932 A1 divulgue un procédé consistant à authentifier un jeton de sécurité, par exemple une carte à puce, auprès d'un contrôleur d'accès en utilisant un procédé biométrique. Le jeton est activé pendant une période prédéfinie en cas d'authentification réussie. Le jeton est authentifié auprès d'un autre contrôleur d'accès via une interface sans fil, c'est-à-dire une interface d'identification par radiofréquence (RFID).

### RESUME DE L'INVENTION

Le but de la présente invention est de fournir une solution palliant au moins partiellement les inconvénients précités.

A cette fin, la présente invention propose un procédé de contrôle d'accès d'un utilisateur à un ensemble d'équipements d'un site sécurisé à partir d'un terminal de communication, ledit utilisateur étant associé à un dispositif portable communicant contenant un identifiant, ledit procédé comportant les étapes de :
- Ouverture d'une session temporaire par un activateur biométrique pour ledit utilisateur au moyen d'une authentification biométrique dudit utilisateur ;
- Autorisation de l'accès par ledit utilisateur à un équipement dudit ensemble, après vérification d'une part de l'ouverture de ladite session temporaire; ledit utilisateur étant identifié par ledit équipement grâce audit dispositif portable communicant, et, d'autre part, de l'authentification dudit terminal de communication par comparaison entre une signature déterminée au moment de l'accès et une signature témoin mémorisée dans une base de données au sein dudit site sécurisé.

Suivant des modes de réalisation préférés, l'invention comprend une ou plusieurs des caractéristiques suivantes qui peuvent être utilisées séparément ou en combinaison partielle entre elles ou en combinaison totale entre elles :
- l'authentification biométrique est effectuée par une interaction avec ledit activateur biométrique ;
- lesdits équipements, ledit terminal de communication, ladite base de données, et ledit activateur biométrique sont connectés par un réseau privé de communication ;
- les données de ladite session temporaire sont stockées sur un serveur de contrôle d'accès et lesdits équipements accèdent audit serveur de contrôle d'accès pour permettre l'autorisation d'accès dudit utilisateur ;
- lesdits équipements stockent dans une mémoire locale, les données de la session temporaire dudit utilisateur pour utilisation lors d'une prochaine autorisation d'accès pour ledit utilisateur ;
- ledit dispositif portable communicant communique avec ledit activateur biométrique et avec ledit terminal de communication par un moyen de communication sans fil de type RFID, NFC, etc. ;
- ledit dispositif portable communicant déclenche la fermeture de ladite session temporaire en cas de rupture de l'association physique entre ledit utilisateur et le dispositif portable communicant ;
- ledit dispositif portable communicant effectue l'authentification biométrique au moyen d'un capteur interne.

Un autre aspect de l'invention concerne un système de contrôle d'accès d'un utilisateur à un ensemble d'équipements d'un site sécurisé à partir d'un terminal de communication, comportant :
- un dispositif portable communicant associé audit utilisateur et contenant un identifiant dudit utilisateur,
- un activateur biométrique permettant l'ouverture d'une session temporaire pour ledit utilisateur au moyen d'une authentification biométrique dudit utilisateur, identifié par ledit dispositif portable communicant,
- et dans lequel lesdits équipements sont adaptés pour n'être utilisables qu'en cas d'autorisation de l'accès par ledit utilisateur après vérification, d'une part, de l'ouverture de ladite session temporaire; ledit utilisateur étant identifié par ledit équipement grâce audit dispositif portable communicant, et, d'autre part, de l'authentification dudit terminal de communication par comparaison entre une signature déterminée au moment de l'accès et une signature témoin mémorisée dans une base de données au sein dudit site sécurisé.

Selon un mode de réalisation de l'invention ce système peut comporter un outre un réseau privé de communication connectant ledit activateur biométrique, ledit terminal de communication, ladite base de données, et lesdits équipements, et un serveur de contrôle d'accès également connecté audit réseau privé de communication et stockant les données de ladite session temporaire.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

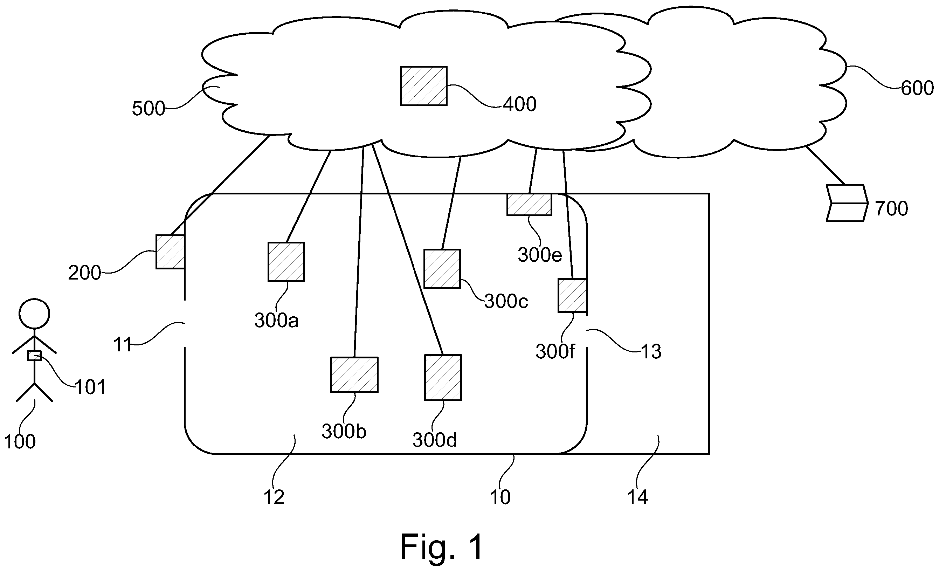

La figure 1 représente schématiquement un exemple de mise en œuvre de l'invention sur un site sécurisé particulier.

### DESCRIPTION DETAILLEE DE L'INVENTION

La figure 1 représente un site sécurisé dans lequel l'invention est susceptible d'être mise en œuvre. Ce site sécurisé 10 comporte un ensemble d'équipements 300a, 300b, 300c, 300d, 300e, 300f. Ces équipements peuvent être de différentes natures.

Dans le cadre d'un site industriel, certains de ces équipements 300a, 300b, 300c, 300d peuvent être des dispositifs ou outils industriels : valves, tableaux de commande de machines-outils, etc. D'autres peuvent comprendre un tableau de commande général 300e permettant de contrôler un secteur ou la totalité du site industriel 10. Un autre type d'équipement peut être un dispositif 300f contrôlant une porte 13. Cette porte 13 peut diviser le site 10 en une partie de sécurité normale 12 et une partie de sécurité renforcée 14 commandée par cette porte 13 et le dispositif de contrôle 300f.

Encore un autre type d'équipement peut être un ordinateur, une tablette numérique ou tout autre terminal permettant de se connecter au réseau privé de communication 500 du site et/ou de pouvoir accéder à des bases de données ou d'autres équipements distants.

L'invention peut s'appliquer également à des sites non industriels, mais nécessitant un haut degré de sécurité de l'accès aux équipements.

Un utilisateur 100, par exemple un membre du personnel du site 10, souhaitant entrer sur le site 10 doit d'abord ouvrir une session temporaire lui permettant d'accéder aux équipements, 300a... 300f, du site. Cette ouverture de session peut se faire à chaque entrée sur le site pour une journée de travail, ou à chaque début de cycle de travail, ou selon toutes autres dispositions mise en place par un gestionnaire du site. Un cycle de travail peut correspondre à une demi-journée par exemple, la journée étant entrecoupée par une pause pour le déjeuner.

L'ouverture de cette session temporaire est effectuée au moyen d'une authentification biométrique de l'utilisateur. Cette authentification peut être mise en œuvre en utilisant différents types de paramètres biométriques : reconnaissance d'une empreinte digitale, de l'iris, de la voix, du visage, du réseau veineux de la paume de la main... Selon un mode de réalisation particulier, plusieurs de ces paramètres biométriques peuvent simultanément utilisés.

Cette ouverture de session temporaire est effectuée par un activateur biométrique 200.

Selon un mode de réalisation, une interaction est mise en place entre l'activateur biométrique et l'utilisateur 100 pour l'authentification biométrique. Notamment, l'activateur biométrique dispose des moyens pour réaliser l'authentification biométrique en fonction du ou des paramètres biométriques retenus :
- Il peut comprendre une caméra vidéo ou appareil photo, ainsi que des moyens de traitement numériques pour réaliser une reconnaissance du visage, de l'iris, etc.
- Il peut comprendre des moyens spécifiques et les moyens de traitement numérique pour réaliser une reconnaissance d'empreinte digitale ou du réseau veineux de la paume de la main, etc.

Les moyens de traitement numérique sont typiquement des moyens logiciels exécutés sur une plateforme de traitement numérique. Ils peuvent être conformes aux solutions de l'état de l'art accessibles à l'homme du métier. Ils peuvent comprendre la comparaison entre une empreinte numérique, générée à partir d'une donnée brute issue de l'acquisition d'un paramètre biométrique par l'activateur numérique (photographie, etc.).

Les empreintes numériques du personnel autorisé sur le site 10 peuvent être stockées soit dans une base de données du site, soit sur un dispositif portable communicant (carte, jeton, bracelet ou autre) dont est équipé chaque membre du personnel. L'utilisation d'un dispositif portable communicant permet à chaque membre du personnel d'avoir avec soi sa seule empreinte biométrique et évite l'utilisation d'une base de données d'empreinte biométrique centralisée.

La base de données peut être déportée sur un serveur de contrôle d'accès 400, accessible de l'activateur biométrique 200 via un réseau privé de communication 500. Alternativement, cette base de données peut être localement stockée sur cet activateur biométrique 200.

Le réseau privé de communication 500 peut mettre en œuvre des mécanismes de sécurisation complémentaire, mais un avantage de l'invention consiste en la possibilité d'utiliser un réseau privé de communication non sécurisé. Ainsi, ce réseau privé de communication 500 peut être une partie du réseau Internet.

Les équipements 300a...300f et l'activateur biométrique 200 peuvent être connectés par le réseau privé de communication 500 tel qu'illustré sur la figure 1. Ils peuvent également être en liaison directe par l'intermédiaire d'un protocole sécurisé.

Par ailleurs, l'utilisateur 100 est associé à un dispositif portable communicant 101. Ce dispositif portable communicant peut être tout dispositif électronique adapté pour être porté par l'utilisateur 100 de façon pratique et pouvant communiquer avec l'activateur biométrique 200 et les équipements 300. Il peut s'agir d'un badge, d'un jeton (« token »), d'un bracelet... ou d'un dispositif pouvant être intégré dans un élément vestimentaire (ceinture, gilet....) notamment dans le cas où l'utilisateur doit porter un vêtement spécifique pour entrer sur le site 10. De multiples mises en œuvre sont envisageables pour ce dispositif portable communicant.

Les moyens de communication entre ce dispositif et l'activateur biométrique et, comme on le verra plus bas, avec les équipements, sont préférentiellement des moyens de communication sans fil.

La technologie RFID (« *Radio Frequency Identification* ») peut par exemple être utilisée. Cette technologie permet la radio-identification de dispositifs portables communicants de type « radio-étiquettes » (ou « tags » en anglais) par la mémorisation d'une information (notamment un identifiant, mais éventuellement d'autres données complémentaires) et sa transmission en réponse à une sollicitation d'un lecteur. L'activateur biométrique 200 peut comprendre un tel lecteur afin de lire l'information mémorisée sur le dispositif portable communicant 101. Cette information comprend un identifiant associé à l'utilisateur 100.

Une autre technologie possible est la communication en champs proche ou NFC pour « Near-Field Communication» en langue anglaise. Il s'agit d'une technologie de communication sans-fil à courte portée et haute fréquence permettant l'échange d'informations entre deux dispositifs. Ainsi, l'activateur biométrique 200 et le dispositif portable communicant 101 peuvent entrer en communication, lorsqu'ils sont suffisamment proches, de sorte que l'identifiant de l'utilisateur 100 peut être transmis à l'activateur biométrique.

Ainsi, la borne biométrique peut connaître à la fois l'utilisateur authentifié par les moyens d'authentification biométrique et un identifiant de l'utilisateur transmis par le dispositif portable communicant. Un contrôle peut être effectué afin de s'assurer que le dispositif portable communicant appartient bien à la personne authentifiée afin d'empêcher une personne de valider le dispositif d'un collègue, par exemple, ainsi que certains types d'intrusions malicieuses.

Si l'utilisateur est authentifié comme un membre autorisé sur le site 10, son dispositif portable communicant est activé. Cette activation correspond à une ouverture d'une session temporaire pour cet utilisateur.

La session est temporaire car le d'utilisateur 100 n'est autorisé à utiliser les équipements du site 10 que durant une période limitée, à l'issue de laquelle la session est fermée. Autrement dit, le dispositif portable communicant 101 n'est activé que pour cette période limitée.

Cette période peut être prédéterminée, par exemple selon la durée d'un cycle de travail, d'une journée, etc. Il peut être plus court, nécessitant les utilisateurs à ouvrir régulièrement une nouvelle session, afin d'accroitre la sécurité des accès au site 10. Différents modes de réalisation sont possibles, en fonction du type de site 10 et de la politique à mettre en place pour la gestion des accès.

L'activation d'un dispositif portable communicant et l'ouverture d'une session temporaire associée peuvent être effectuées de différentes façons :
Selon un mode de réalisation, les données de la session temporaire sont stockées sur le serveur de contrôle d'accès 400, qui est connecté au réseau privé de communication 500 et donc accessible par l'activateur biométrique 200. Ainsi, lors que ce dernier ouvre une session temporaire, des données relatives à cette ouverture pour l'utilisateur 100 peuvent être téléchargées vers le serveur de contrôle d'accès. Ces données peuvent notamment comprendre une date d'ouverture, une durée, une date de terminaison, etc. Ces données sont donc représentatives de l'activation du dispositif portable communicant.

Le serveur de contrôle d'accès 400 peut être prévu pour contrôler ces données et les comparer à une date courante de sorte à terminer la session temporaire lorsque les conditions temporelles sont remplies.

Selon un autre mode de réalisation, le dispositif portable communicant 101 est prévu pour être inscriptible par l'activateur biométrique. Ceci est possible via, notamment, une technologie de type NFC. Il dispose alors d'une mémoire réinscriptible dans laquelle l'activateur biométrique 200 peut écrire des données relatives à la session temporaire. Ces données peuvent notamment comprendre une date d'ouverture, une durée, une date de terminaison, etc. et sont donc représentatives de l'activation du dispositif portable communicant.

L'activateur biométrique peut écrire des informations qu'il a déterminées lui-même ou bien qui ont été fournies par le serveur de contrôle d'accès 400. Il peut être prévu que le serveur de contrôle d'accès 400 soit systématiquement contacté par l'activateur biométrique afin de permettre l'application d'une gestion centralisée d'une politique d'accès.

Une variante de ce mode de réalisation consiste à permettre à l'activateur de communication de transmettre au dispositif portable communicant un message contenant les informations à écrire dans sa mémoire, plutôt que de les inscrire directement. Le dispositif portable communicant est alors adapté pour recevoir et interpréter ce message et à inscrire les informations dans sa mémoire.

Selon un mode de réalisation, l'authentification biométrique n'est pas effectuée par l'activateur biométrique mais par le dispositif portable communicant 101. Celui-ci peut en effet contenir ou être associé à un capteur biométrique.

Il peut toutefois être prévu que ce dispositif communique avec l'activateur biométrique 200 pour lui transmettre les données issues du capteur biométrique (signature biométrique, etc.) afin que le cas échéant celui-ci effectue l'ouverture de la session temporaire, éventuellement après communication avec le serveur de contrôle d'accès 400.

Selon un mode de réalisation, la session temporaire peut également être fermée par la survenance d'événements non-temporels. Notamment, un tel événement peut être la rupture de l'association physique entre l'utilisateur 100 et le dispositif portable communicant 101.

Par exemple, selon un mode de réalisation, le dispositif portable communicant 101 est mis en œuvre par un bracelet, une ceinture ou tout autre objet fixé ou lié à l'utilisateur 100. Ce dispositif peut en outre disposer de moyens pour détecter son ouverture et sa fermeture. Il peut alors déterminer qu'il est retiré de l'utilisateur 100 et déclencher sa désactivation.

Il peut également déterminer son éloignement de l'utilisateur, par exemple en détectant une interruption du contact avec la peau de l'utilisateur 100 par rupture d'un contact électrique. Il peut aussi détecter l'interruption du signal correspondant aux battements du cœur de l'utilisateur 100 (pulsation cardiaque). Il peut là aussi déclencher alors sa désactivation.

La désactivation peut être déclenchée par l'inscription d'une information de statut appropriée dans la mémoire du dispositif portable communicant qui peut être lu par les équipements 300a...300f au moyen de technologies telles que RFID, NFC, etc. C'est notamment le cas lors que la gestion des sessions temporaires est effectuée de façon centralisée par le serveur de contrôle d'accès 400.

Cette inscription peut consister en l'effacement de certaines des données de session, ou bien en leur modification, en fonction de mises en œuvre pratiques d'implémentation. Par exemple, une donnée peut indiquer de façon binaire si la session temporaire est ouverte ou non, et donc si le dispositif portable communicant 101 est activé ou non. Selon un autre exemple, la date de terminaison peut être forcée à la date actuelle, faisant ainsi en sorte que la session temporaire se termine à la date courante à la place de la date de terminaison initialement prévue.

Une fois la session temporaire ouverte, l'utilisateur 100 peut essayer d'accéder aux divers équipements du site 10. Cet accès est autorisé après vérification de l'ouverture de la session temporaire à la date de cet accès. Les équipements pour lesquels une autorisation est nécessaire peuvent ne représenter qu'une partie des équipements disponibles sur le site.

Les équipements à sécuriser peuvent être associé à des moyens pour communiquer avec le dispositif portable communicant. Ces moyens peuvent être similaires à ceux de l'activateur biométrique et permettent de mettre en œuvre une communication sans fil entre les équipements et dispositif portable, notamment conformément aux technologies RFID, NFC, etc.

Comme il a été dit précédemment, tout type d'équipements peut être géré, piloté ou commandé dans le cadre de l'invention. Dans le cas d'un équipement de type ordinateur, terminal mobile ou fixe, tablette..., celui-ci peut être associé également avec un tel lecteur RFID ou NFC, qui en collaboration avec le procédé de l'invention et des moyens logiciels peut autoriser ou non l'accès à l'utilisateur 100.

Cette communication permet notamment à l'équipement 300 de lire un identifiant de l'utilisateur 100 stocké dans le dispositif portable communicant 101.

L'équipement dispose en outre de moyens pour déterminer une autorisation d'accès en fonction de cet identifiant.

Plusieurs mises en œuvre sont possibles.

Selon un premier mode de réalisation, les données de la session temporaire de l'utilisateur 100 sont stockées sur le serveur de contrôle d'accès 400. Dans ce cas, l'équipement 300 accède à ce serveur via le réseau privé de communication 500 auquel il est également connecté. Il peut transmettre une requête contenant l'identifiant de l'utilisateur 100 et recevoir en réponse les données de la session temporaire correspondant à cet identifiant.

Ces données sont représentatives de l'activation du dispositif portable communicant. Par exemple, si une date de début ou de fin de la session temporaire est indiquée parmi ces données, celle-ci est comparée à une date courante pour déterminer si la session temporaire est effectivement ouverte à la date courante, correspondant à la date d'accès, et si le dispositif portable communicant est activé ou non.

L'autorisation d'accès n'est évidemment donnée que si ce dispositif portable communicant est activé. Si ce n'est pas le cas, l'utilisateur 100 ne peut pas accéder à l'équipement 300.

Selon une variante de ce mode de réalisation, les équipements peuvent localement stocker toutes ou parties des données des sessions temporaires. Dans ce mode de réalisation, l'équipement peut autoriser ou non l'accès sur la base de ces informations locales, sans avoir à contacter le serveur de contrôle d'accès 400 distant. Il est possible de prévoir des mises à jour de ces informations locales par le serveur distant, de façon périodique et/ou lors de chaque nouvelle ouverture d'une session périodique via l'activateur biométrique 200.

Selon un troisième mode de réalisation, précédemment décrit, les données de session temporaire sont stockées sur le dispositif portable communicant. Auquel cas, l'équipement 300 peut alors lire ces données et déterminer si la session temporaire est effectivement ouverte et, en conséquence, autoriser ou non l'accès de l'utilisateur.

Comme précédemment, il s'agit de vérifier si la session temporaire est ouverte à la date de la demande d'accès. Conséquemment, les données de session temporaire stockée sur le dispositif 101 doivent contenir au moins une date (début, fin...) afin de pouvoir la comparer à la date courante.

Ainsi, l'authentification biométrique n'est effectuée qu'une fois pour ouvrir une session temporaire. Cela permet de n'avoir à disposer qu'un nombre limité d'activateurs biométriques sur le site 10.

En outre, si, sur le site il est indispensable ou conseillé de porter des gants, un masque, des lunettes... l'utilisateur n'a pas nécessité de les retirer pour procéder à une authentification biométrique à chaque utilisation d'un nouveau équipement : la simple vérification du statut de sa session temporaire suffit et cette vérification peut être effectuée sans manipulation de l'utilisateur, par voie radio (RFIC, NFC...).

Ce mécanisme d'autorisation de l'accès aux équipements est donc immédiat pour les utilisateurs et est donc compatible à la fois avec des objectifs industriels d'efficacité, mais aussi avec des impératifs d'urgence qui peuvent survenir (accès à un panneau de contrôle en cas d'accident, etc.)

Le procédé de l'invention est en outre compatible avec la plupart des conditions d'un site sécurisé 10 qui peut être un site industriel : un tel site peut être bruyant, sale, humide, emplis de particules poussiéreuses ou autres, de sorte que certains mécanismes d'authentification ou de sécurité, comme des cartes à puces, etc. ne peuvent pas être mis en place. L'invention permet de déclencher l'autorisation d'accès à un équipement sans contact, voire sans même sortir le dispositif portable communicant de sa poche, de sa ceinture, etc. et peut donc être mis en œuvre dans ces conditions difficiles.

L'utilisation de mécanismes de détection d'éloignement de l'utilisateur permet de désactiver la session et donc de se prémunir des vols ou emprunts entre collègues.

L'utilisation de sessions temporaires durant lesquelles un utilisateur peut accéder aux équipements grâce à son dispositif portable communicant permet de se prémunir des vols ou emprunts entre collègues.

Elle permet en outre de définir des politiques d'accès de façon globale à l'échelle du site 10. On peut ainsi de façon centralisée décider que les sessions temporaires se terminent toutes à une certaine heure. On peut aussi définir des sessions temporaires se terminant à des heures différentes en fonction des équipes, etc.

Il est également possible de désactiver à distance certains dispositifs portables communicants en modifiant l'heure de fin dans les données de la session temporaire mémorisée, par exemple, sur le serveur de contrôle d'accès 400. Cela peut être utile en cas d'événement imprévu, ou bien, par exemple pour exclure un utilisateur particulier ayant un comportement suspect, etc.

Le système selon l'invention contrôle l'accès à des équipements (serveurs, bases de données, ressources réseaux...) du site 10 depuis un terminal de communication 700 qui peut être sur le site ou distant.

Ce terminal est typiquement un ordinateur, un « smartphone », une tablette, etc. Ce terminal peut indifféremment être mobile ou fixe. Il peut être associé à des moyens pour communiquer avec le dispositif portable communicant 101 et pour permettre l'autorisation ou non de l'accès de l'utilisateur aux équipements du site 10.

Les mécanismes mis en œuvre sont similaires à ceux précédemment décrits pour l'accès aux équipements 300, mais ils s'appliquent ici à l'accès non pas au terminal 700 lui-même mais aux équipements distants 300 au travers du réseau privé de communication 500. Cet accès peut être appelé « accès logique » par opposition à l'accès physique à un équipement 300.

Dans le cas d'un tel accès logique, il est mis en place une double authentification basée à la fois sur la vérification de l'ouverture d'une session temporaire pour l'utilisateur, et également sur l'authentification de l'équipement 700. Ceci permet de garantir que l'authentification du personnel s'effectue par l'intermédiaire d'un équipement 700 lui-même authentifié au cours de la même transaction électronique.

Pour authentifier l'équipement, une signature de cet équipement est déterminée à chaque accès, permettant sa comparaison avec une signature témoin mémorisée dans une base de données. Le réseau peut ainsi s'assurer de quel équipement il s'agit. Cette signature peut être cryptée et conçue de façon à ne pas être falsifiable.

Ce mécanisme permet de contrôler que l'équipement utilisé est bien un équipement de confiance autorisé sur le site 10 et, éventuellement, qu'il est bien associé à l'utilisateur 100. Ce mécanisme permet notamment de se prémunir de l'introduction d'équipement tiers sur le site 10, et d'éviter ainsi les risques de sécurité liés à cette introduction.

Cette authentification à trois facteurs permet donc de s'assurer à la fois du « ce que je suis » (les aspects biométriques et le port du dispositif portable forment une authentification à deux facteurs) et du « ce que je possède » (l'équipement utilisé par l'utilisateur ajoute un facteur supplémentaire au processus d'authentification).

Dans le cas où le terminal est situé à l'extérieur du site 10, cet accès est effectué à la fois au travers du réseau privé 500 et d'un réseau public de communication 600. Ce réseau public est typiquement le réseau Internet permettant à un utilisateur 100 de se connecter à certains des équipements 300 du site 10 depuis chez lui et/ou depuis un autre site de la société ou de l'organisme gérant le site 10. Selon certaines implémentations, ces deux réseaux font parties du réseau Internet.

Si le terminal est considéré « de confiance », il peut n'être prévu que l'autorisation d'accès à ce terminal : une fois autorisé d'accéder au terminal 700, l'utilisateur 100 peut directement accéder aux autres équipements 300 sans autre traitement particulier d'authentification. Un terminal peut être considéré « de confiance» si, par exemple, il est connecté directement au réseau privé de communication 500.

Dans le cas contraire, et notamment si le terminal 700 se connecte au réseau privé de communication via un réseau public 600, un mécanisme supplémentaire peut être prévu. Ce mécanisme supplémentaire peut mettre en œuvre divers mécanismes d'authentification. Il peut par exemple s'agir de méthode dites « faibles », telles que celles basées sur l'adresse MAC du terminal 700, sur l'identifiant IMEI (« *International Mobile Equipment Identity »*) ou MEID (« *Mobile Equipment Identifier* ») ; ou de méthodes dites fortes telles que celles basées sur protocole CHAP (« Challenge Handshake Authentification Protocol) défini par le RFC 1994 de l'IETF, ou le protocole de Kerberos, etc.

Il est possible de déterminer si un terminal 700 demandant une autorisation d'accès est un terminal « de confiance » ou non, et notamment s'il se connecte via un réseau public ou non de différentes façons. Une de ces façons consiste à établir un plan d'adressage IP (« Internet Protocol ») discriminant de façon appropriée les équipements connectés au réseau privé de communication 500 des autres équipements.

Par exemple, le réseau privé de communication 500 peut utiliser des adresses IP 192.168.0.x où x permet d'adresser un équipement en particulier au sein du réseau privé. Si le réseau privé de communication comporte plusieurs sous-réseaux, par exemple un réseau fixe et un réseau Wifi, ce dernier peut utiliser des adresses IP 192.168.1.x.

Les mécanismes de routage d'Internet garantissent que les équipements situés hors de ce réseau privé de communication ne peuvent pas avoir des adresses compris dans les intervalles d'adresses ainsi définis. Il est donc aisément possible de déterminer si un équipement est connecté directement à ce réseau privé ou bien via un réseau public

Bien entendu, la présente invention n'est pas limitée aux exemples et au mode de réalisation décrits et représentés, mais elle est susceptible de nombreuses variantes accessibles à l'homme de l'art.

## Revendications

1. Procédé de contrôle d'accès d'un utilisateur (100) à un ensemble d'équipements (300a, 300b, 300c, 300d, 300e, 300f) d'un site sécurisé (10) à partir d'un terminal de communication (700), ledit utilisateur étant associé à un dispositif portable communicant (101) contenant un identifiant, ledit procédé comportant les étapes de :
- ouverture d'une session temporaire par un activateur biométrique (200) pour ledit utilisateur au moyen d'une authentification biométrique dudit utilisateur ;
- autorisation de l'accès par ledit utilisateur à un équipement dudit ensemble après vérification d'une part de l'ouverture de ladite session temporaire; ledit utilisateur étant identifié par ledit équipement grâce audit dispositif portable communicant (101), et, d'autre part, de l'authentification dudit terminal de communication (700) par comparaison entre une signature déterminée au moment de l'accès et une signature témoin mémorisée dans une base de données au sein dudit site sécurisé (10).

2. Procédé selon la revendication précédente, dans lequel ladite authentification biométrique est effectuée par une interaction avec ledit activateur biométrique (200).

3. Procédé selon l'une des revendications précédentes, dans lequel lesdits équipements, ledit terminal de communication (700), ladite base de données, et ledit activateur biométrique sont connectés par un réseau privé de communication (500).

4. Procédé selon la revendication précédente, dans lequel les données de ladite session temporaire sont stockées sur un serveur de contrôle d'accès (400) et dans lequel lesdits équipements accèdent audit serveur de contrôle d'accès pour permettre l'autorisation d'accès dudit utilisateur.

5. Procédé selon la revendication précédente, dans lequel lesdits équipements stockent dans une mémoire locale, les données de la session temporaire dudit utilisateur (100) pour utilisation lors d'une prochaine autorisation d'accès pour ledit utilisateur.

6. Procédé selon l'une des revendications précédentes, dans lequel ledit dispositif portable communicant (101) communique avec ledit activateur biométrique (200) et avec ledit terminal de communication (700) par un moyen de communication sans fil de type RFID, NFC, etc.

7. Procédé selon l'une des revendications précédentes, dans lequel ledit dispositif portable communicant (101) déclenche la fermeture de ladite session temporaire en cas de rupture de l'association physique entre ledit utilisateur (100) et le dispositif portable communicant (101).

8. Procédé selon l'une des revendications précédentes, dans lequel ledit dispositif portable communicant (101) effectue l'authentification biométrique au moyen d'un capteur interne.

9. Système de contrôle d'accès d'un utilisateur (100) à un ensemble d'équipements (300) d'un site sécurisé (10) à partir d'un terminal de communication (700), comportant :
- un dispositif portable communicant (101) associé audit utilisateur et contenant un identifiant dudit utilisateur,
- un activateur biométrique (200) permettant l'ouverture d'une session temporaire pour ledit utilisateur au moyen d'une authentification biométrique dudit utilisateur, identifié par ledit dispositif portable communicant,
- et dans lequel lesdits équipements sont adaptés pour n'être utilisables qu'en cas d'autorisation de l'accès par ledit utilisateur après vérification, d'une part, de l'ouverture de ladite session temporaire; ledit utilisateur étant identifié par ledit équipement grâce audit dispositif portable communicant (101), et, d'autre part, l'authentification dudit terminal de communication (700) par comparaison entre une signature déterminée au moment de l'accès et une signature témoin mémorisée dans une base de données au sein dudit site sécurisé (10).

10. Système selon la revendication précédente, comportant un outre un réseau privé de communication (500) connectant ledit activateur biométrique (200), ledit terminal de communication (700), ladite base de données, et lesdits équipements, et un serveur de contrôle d'accès (400) également connecté audit réseau privé de communication et stockant les données de ladite session temporaire

## Patentansprüche

1. Verfahren zur Steuerung des Zugriffs eines Benutzers (100) auf eine Gesamtheit von Ausrüstungen (300a, 300b, 300c, 300d, 300e, 300f) eines gesicherten Standorts (10) von einem Kommunikationsterminal (700) aus, wobei der Benutzer mit einer tragbaren Kommunikationsvorrichtung (101) verknüpft ist, die eine Kennung aufweist, wobei das Verfahren folgende Schritte umfasst:
- Eröffnung einer temporären Sitzung durch einen biometrischen Aktivator (200) für den Benutzer mittels einer biometrischen Authentifizierung des Benutzers;
- Genehmigung des Zugriffs des Benutzers auf eine Ausrüstung der Gesamtheit nach Verifizierung einerseits der Eröffnung der temporären Sitzung, wobei der Benutzer durch die Ausrüstung dank der tragbaren Kommunikationsvorrichtung (101) identifiziert wird, und andererseits der Authentifizierung des Kommunikationsterminals (700) durch Vergleich zwischen einer zum Zeitpunkt des Zugriffs bestimmten Signatur und einer in einer Datenbank innerhalb des gesicherten Standorts (10) gespeicherten Zeugensignatur.

2. Verfahren nach vorstehendem Anspruch, wobei die biometrische Authentifizierung durch Interaktion mit dem biometrischen Aktivator (200) erfolgt.

3. Verfahren nach einem der vorstehenden Ansprüche, wobei die Ausrüstungen, das Kommunikationsterminal (700), die Datenbank und der biometrische Aktivator durch ein privates Kommunikationsnetz (500) verbunden sind.

4. Verfahren nach vorstehendem Anspruch, wobei die Daten der temporären Sitzung auf einem Server zur Steuerung des Zugriffs (400) gespeichert sind und wobei die Ausrüstungen auf den Server zur Steuerung des Zugriffs zugreifen, um die Zugangsgenehmigung des Benutzers zu ermöglichen.

5. Verfahren nach vorstehendem Anspruch, wobei die Ausrüstungen die Daten der temporären Sitzung des Benutzers (100) zur Verwendung bei einer nächsten Zugriffsgenehmigung für den Benutzer in einem lokalen Speicher speichern.

6. Verfahren nach einem der vorstehenden Ansprüche, wobei die tragbare Kommunikationsvorrichtung (101) mit dem biometrischen Aktivator (200) und mit dem Kommunikationsterminal (700) über ein drahtloses Kommunikationsmittel vom Typ RFID, NFC usw. kommuniziert.

7. Verfahren nach einem der vorstehenden Ansprüche, wobei die tragbare Kommunikationsvorrichtung (101) das Schließen der temporären Sitzung bei Unterbrechung der physischen Verknüpfung zwischen dem Benutzer (100) und der tragbaren Kommunikationsvorrichtung (101) auslöst.

8. Verfahren nach einem der vorstehenden Ansprüche, wobei die tragbare Kommunikationsvorrichtung (101) die biometrische Authentifizierung mittels eines internen Sensors durchführt.

9. System zur Steuerung des Zugriffs eines Benutzers (100) auf eine Gesamtheit von Ausrüstungen (300) eines gesicherten Standorts (10) von einem Kommunikationsterminal (700) aus, umfassend:
- eine tragbare Kommunikationsvorrichtung (101), die mit dem Benutzer verknüpft ist und eine Kennung des Benutzers aufweist,
- einen biometrischen Aktivator (200), der die Eröffnung einer temporären Sitzung für den Benutzer mittels einer biometrischen Authentifizierung des durch die tragbare Kommunikationsvorrichtung identifizierten Benutzers ermöglicht,
- und wobei die Ausrüstungen so beschaffen sind, dass sie nur bei Genehmigung des Zugriffs durch den Benutzer nach Verifizierung einerseits der Eröffnung der temporären Sitzung verwendbar sind; wobei der Benutzer durch die Ausrüstung dank der tragbaren Kommunikationsvorrichtung (101) identifiziert wird, und andererseits der Authentifizierung des Kommunikationsterminals (700) durch Vergleich zwischen einer zum Zeitpunkt des Zugriffs bestimmten Signatur und einer in einer Datenbank innerhalb des gesicherten Standorts (10) gespeicherten Zeugensignatur.

10. System nach vorstehendem Anspruch, ferner umfassend ein privates Kommunikationsnetz (500), das den biometrischen Aktivator (200), das Kommunikationsterminal (700), die Datenbank und die Ausrüstungen verbindet, und einen Server zur Steuerung des Zugriffs (400), der ebenfalls mit dem privaten Kommunikationsnetz verbunden ist und die Daten der temporären Sitzung speichert

## Claims

1. A method for controlling access of a user (100) to a set of equipments (300a, 300b, 300c, 300d, 300e, 300f) of a secure site (10) from a communication terminal (700), said user being associated with a communicating portable device (101) containing an identifier, said method comprising the steps of:
- opening of a temporary session by a biometric activator (200) for said user by means of a biometric authentication of said user;
- authorizing the access by said user to an equipment of said set, following verification on the one hand of the opening of said temporary session; said user being identified by said equipment by means of said communicating portable device (101), and, on the other hand, authentication of said communication terminal (700) by comparison between a signature determined at the time of the access and a control signature stored in a database within said secure site (10).

2. The method according to the preceding claim, wherein said biometric authentication is carried out by means of an interaction with said biometric activator (200).

3. The method according to one of the preceding claims, wherein said equipments, said communication terminal (700), said database, and said biometric activator are connected via a private communication network (500).

4. The method according to the preceding claim, wherein the data of said temporary session are stored on an access control server (400) and wherein said equipments access said access control server to allow the access authorization of said user.

5. The method according to the preceding claim, wherein said equipments store the temporary session data of said user (100) in a local memory for use during a next access authorization for said user.

6. The method according to one of the preceding claims, wherein said communicating portable device (101) communicates with said biometric activator (200) and with said communication terminal (700) via a wireless communication means, of RFID, NFC, etc., type,

7. The method according to one of the preceding claims, wherein said communicating portable device (101) initiates the closure of said temporary session in the event of a break in the physical association between said user (100) and the communicating portable device (101).

8. The method according to one of the preceding claims, wherein said communicating portable device (101) performs the biometric authentication by means of an internal sensor.

9. A system for controlling access of a user (100) to a set of equipments (300) of a secure site (10) from a communication terminal (700), comprising:
- a communicating portable device (101) associated with said user and containing an identifier of said user,
- a biometric activator (200) allowing the opening of a temporary session for said user by means of a biometric authentication of said user, identified by said communicating portable device,
- and wherein said equipments are suitable for being usable only in the event of authorization of the access by said user following verification, on the one hand, of the opening of said temporary session; said user being identified by said equipment by means of said communicating portable device (101), and, on the other hand, authentication of said communication terminal (700) by comparison between a signature determined at the time of the access and a control signature stored in a database within said secure site (10).

10. The system according to the preceding claim, further comprising a private communication network (500) connecting said biometric activator (200), said communication terminal (700), said database, and said equipments, and an access control server (400) also connected to said private communication network and storing the data of said temporary session.
